# EUROPEAN PATENT APPLICATION

(11) **EP 3 501 718 A1**
(43) Date of publication of application: **26.06.2019**
(21) Application number: 17841343.1
(22) Date of filing: 25.07.2017
(51) Int. Cl.: B23K 9/10, B23K 9/29, B23K 10/00, B23K 10/02

(54) **TORCH FOR HEAT PROCESSING, POWER SOURCE APPARATUS, WIRE FEED APPARATUS, AND HEAT PROCESSING SYSTEM**

(30) Priority: 18.08.2016 JP 2016160336
(71) Applicant: Daihen Corporation, Osaka-shi, Osaka 532-8512 (JP)
(72) Inventor: IMAMACHI Hiroki, Osaka-shi Osaka 532-8512 (JP); UMEZAWA Ichiro, Osaka-shi Osaka 532-8512 (JP)
(74) Representative: Boult Wade Tennant LLP
(86) International application number: PCT/JP2017/026886
(87) International publication number: WO 2018/034115

(57) **Abstract**

According to an aspect of the present disclosure, a heat processing torch is provided. The heat processing torch includes a sensor unit and a notification unit. The sensor unit detects a temperature at a predetermined position of the heat processing torch. The notification unit reports information, and gives notification of the temperature detected by the sensor unit.

## Description

### TECHNICAL FIELD

The present disclosure relates to a heat processing torch, a power source, a wire feeder, and a heat processing system.

### BACKGROUND ART

A heat processing torch may be used for performing welding or cutting by the heat of the arc, and generally a usage rate for safe use is set with such a torch. The usage rate is a ratio (percentage) relating to a time of continuous use of the torch with respect to a predetermined period, and the upper limit is prescribed depending on the electric current to be used. A worker may, however, perform thermal processing beyond the upper limit of the usage rate. In that case, the temperature at the tip of the torch may increase due to the arc heat until the torch is damaged.

### SUMMARY OF INVENTION

It is an object of the present disclosure to provide a heat processing torch and a heat processing system that can prevent thermal damage to the torch, in particular without affecting the quality of a workpiece.

According to a first aspect of the present disclosure, a heat processing torch is provided. The heat processing torch includes a sensor unit and a notification unit. The sensor unit detects a temperature at a predetermined position of the heat processing torch. The notification unit reports information, and gives notification of the temperature detected by the sensor unit.

According to a second aspect of the present disclosure, a heat processing system is provided. The heat processing system includes a heat processing torch provided by the first aspect of the present disclosure, and a power supply apparatus. The power supply apparatus supplies electric power to the heat processing torch.

According to a third aspect of the present disclosure, a power supply apparatus is provided. The power supply apparatus supplies electric power to a heat processing torch including a sensor for detecting a temperature at a predetermined position of the heat processing torch. The power supply apparatus includes a notification unit that gives notification of the temperature detected using the sensor.

According to a fourth aspect of the present disclosure, a heat processing system is provided. The heat processing system includes a power supply apparatus provided by the third aspect of the present disclosure, and the heat processing torch.

According to a fifth aspect of the present disclosure, a wire feed apparatus is provided. The wire feed apparatus feeds a wire electrode to a heat processing torch provided with a sensor for detecting a temperature at a predetermined position of the heat processing torch. The wire feed apparatus includes a notification unit that gives notification of the temperature detected using the sensor.

According to a sixth aspect of the present disclosure, a heat processing system is provided. The heat processing system includes a wire feed apparatus provided by the fifth aspect of the present disclosure, the heat processing torch, and a power supply apparatus that supplies electric power to the heat processing torch.

Other features and advantages of the present disclosure will become more apparent from the detailed description given below with reference to the accompanying drawings.

### BRIEF DESCRIPTION OF DRAWINGS

FIG. 1A is a schematic diagram showing the overall configuration of a welding system according to a first embodiment.
FIG. 1B is a block diagram showing the functional configuration of a welding system according to the first embodiment.
FIG. 2A is a front view of an example of a welding torch according to the first embodiment.
FIG. 2B is a plan view of an example of a welding torch according to the first embodiment.
FIG. 3 is a flowchart for explaining torch temperature notification processing performed by a control unit.
FIG. 4 shows changes in a torch temperature when a worker performs welding work while recognizing the torch temperature displayed in a display.
FIG. 5A is a partial front view of an example of a welding torch according to a second embodiment.
FIG. 5B is a partial enlarged plan view of an example of a welding torch according to a second embodiment.
FIG. 6A is a block diagram showing the functional configuration of a welding system according to a third embodiment.
FIG. 6B is a block diagram showing the functional configuration of a welding system according to a fourth embodiment.

### MODE FOR CARRYING OUT INVENTION

Embodiments of the present disclosure will be described below with reference to the drawings, in which a welding torch (welding system) is presented as an example.

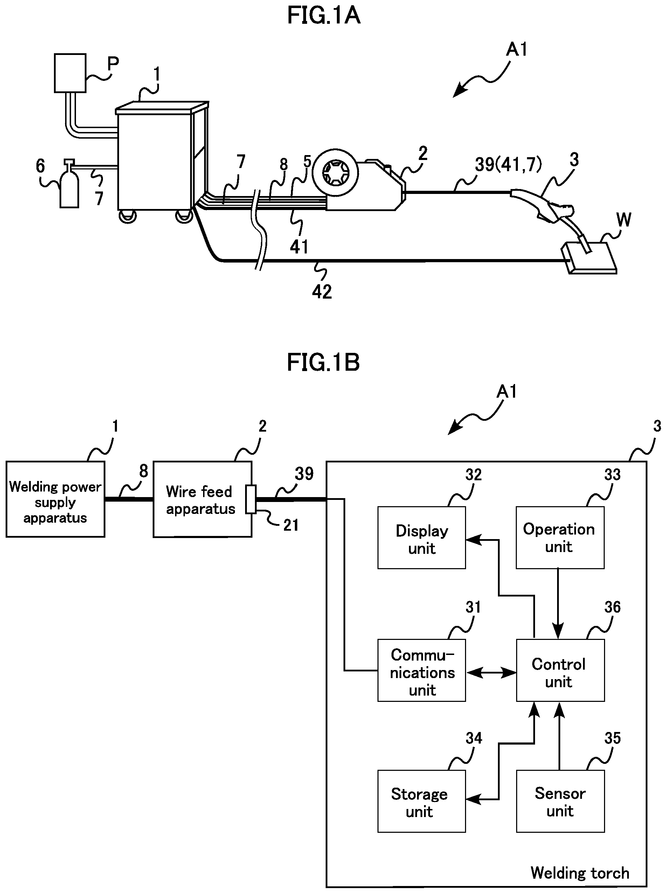

FIGS. 1A and 1B are diagrams for explaining a welding system A1 according to a first embodiment. FIG. 1A is a schematic diagram showing the overall configuration of the welding system A1 according to the first embodiment. FIG. 1B is a block diagram showing the functional configuration of the welding system A1.

As shown in FIGS. 1A and 1B, the welding system A1 includes a welding power supply apparatus 1, a wire feed apparatus 2, a welding torch 3, power cables 41 and 42, an electric power transmission line 5, a signal line 8, a gas cylinder 6 and a gas pipe 7. In the present embodiment, the welding system A1 corresponds to an example of a "heat processing system", and the welding torch 3 corresponds to an example of a "heat processing torch". One output terminal of the welding power supply apparatus 1 is connected to the welding torch 3 through the power cable 41. The wire feed apparatus 2 feeds the wire electrode to the welding torch 3 and causes the tip of the wire electrode to protrude from the tip of the welding torch 3. A contact chip disposed at the tip of the welding torch 3, and via the chip the power cable 41 and the wire electrode are electrically connected. The other output terminal of the welding power supply apparatus 1 is connected to the workpiece W through the power cable 42. The welding power supply apparatus 1 causes an arc to be generated between the tip of the wire electrode protruding from the tip of the welding torch 3 and the workpiece W, and supplies electric power to the arc. The welding system A1 performs welding of the workpiece W with the heat of the arc.

The welding system A1 uses shielding gas when performing welding. Shielding gas from the gas cylinder 6 is supplied to the tip of the welding torch 3 by the gas pipe 7, which is provided so as to pass through the welding power supply apparatus 1 and the wire feed apparatus 2. Electric power (for example, DC 24V) for driving e.g. a feed motor is supplied from the welding power supply apparatus 1 to the wire feed apparatus 2 through the electric power transmission line 5. Also, the welding power supply apparatus 1 and the wire feed apparatus 2 communicate through the signal line 8. The welding system A1 may have a configuration in which cooling water circulates through the welding torch 3.

The welding power supply apparatus 1 supplies electric power for arc welding to the welding torch 3. The welding power supply apparatus 1 converts three-phase alternating current electric power input from an electric power system P into electric power suitable for arc welding, and outputs this electric power. Also, the welding power supply apparatus 1 converts the three-phase alternating current electric power input from the electric power system P into direct current electric power for driving e.g. the feed motor of the wire feed apparatus 2, and outputs this electric power through the electric power transmission line 5 to the wire feed apparatus 2.

The welding power supply apparatus 1 is controlled to output the electric power according to e.g. welding conditions, and the welding conditions are changed according to operation of an operation portion (not shown). Also, the welding power supply apparatus 1 changes the welding conditions according to a signal input from the welding torch 3 through the signal line 8.

The wire feed apparatus 2 feeds the wire electrode to the welding torch 3. The wire electrode passes through the interior of a liner provided inside a torch cable 39 and the welding torch 3, and is guided to the tip of the welding torch 3. The wire feed apparatus 2 drives e.g. the feed motor with the electric power supplied from the welding power supply apparatus 1 through the electric power transmission line 5. This electric power is also supplied from the wire feed apparatus 2 to the welding torch 3 through an electric power transmission line (not shown) provided inside the torch cable 39. The wire feed apparatus 2 communicates with the welding power supply apparatus 1 through the signal line 8. Also, the wire feed apparatus 2 communicates with the welding torch 3 through a signal line (not shown) provided inside the torch cable 39. Communications between the welding torch 3 and the welding power supply apparatus 1 are performed through the wire feed apparatus 2.

The wire feed apparatus 2 and the welding torch 3 are connected by the torch cable 39. The torch cable 39 is connected to a base end of the welding torch 3, and disposed inside of the cable are the power cable 41, the gas pipe 7, the liner, the electric power transmission line and the signal line.

A connector 21 is a connection terminal for connecting the welding torch 3 and the wire feed apparatus 2. For example, the connector 21 is a recessed connection terminal and connects the welding torch 3 and the wire feed apparatus 2 by inserting a protruding torch plug (not shown) provided at one end of the torch cable 39 of the welding torch 3. The power cable 41, the gas pipe 7, the liner, the electric power transmission line 5 and the signal line 8 inside of the wire feed apparatus 2 are respectively configured to be connected to the power cable 41, the gas pipe 7, the liner, the electric power transmission line and the signal line inside of the torch cable 39 through this connector 21.

The welding torch 3 performs welding of the workpiece W by welding electric power supplied from the welding power supply apparatus 1. The welding torch 3 includes, as functional blocks, a communications unit 31, a display unit 32, an operation unit 33, a storage unit 34, a sensor unit 35, and a control unit 36.

The communications unit 31 performs communications with the wire feed apparatus 2. The communications unit 31 transmits a signal input from the control unit 36 to the wire feed apparatus 2 through the signal line inside the torch cable 39. Also, the communications unit 31 receives a signal input from the wire feed apparatus 2 through the signal line inside the torch cable 39, and outputs the received signal to the control unit 36. As a communications standard, for example, the CAN (Controller Area Network) standard is used.

The display unit 32 performs various display, and is provided with, for example, a display 321 (described later) that may be a liquid crystal display device. The display unit 32 is controlled by the control unit 36, and performs display of e.g. welding conditions stored in the storage unit 34, and detection values detected by the sensor unit 35. The display unit 32 corresponds to an example of a "notification unit".

The operation unit 33 has a plurality of operation means, and outputs operation of each operation means by a worker to the control unit 36 as an operation signal. As described later, a torch switch 331 and operation buttons 332 serve as the operation means. Note that other operation means may be provided in the operation unit 33.

The storage unit 34 stores various setting values for welding conditions, and information regarding total welding time, for example.

The sensor unit 35 has a plurality of sensors, and outputs detection values of each sensor to the control unit 36. In the present embodiment, the sensor unit 35 is provided with an acceleration sensor 351 and a temperature sensor 352 described later. Note that the sensor unit 35 may be provided with other sensors.

The control unit 36 controls the welding torch 3, and is realized by, for example, a microcomputer. The control unit 36 performs predetermined processing according to an operation signal input from the operation unit 33. Also, the control unit 36 outputs the detection values input from the sensor unit 35 to be displayed, performs a predetermined calculation based on the detection values, and uses the calculation results for processing. Also, the control unit 36 controls communications by the communications unit 31, writing and reading of information of the storage unit 34, and display by the display unit 32. The specific content of control will be described later.

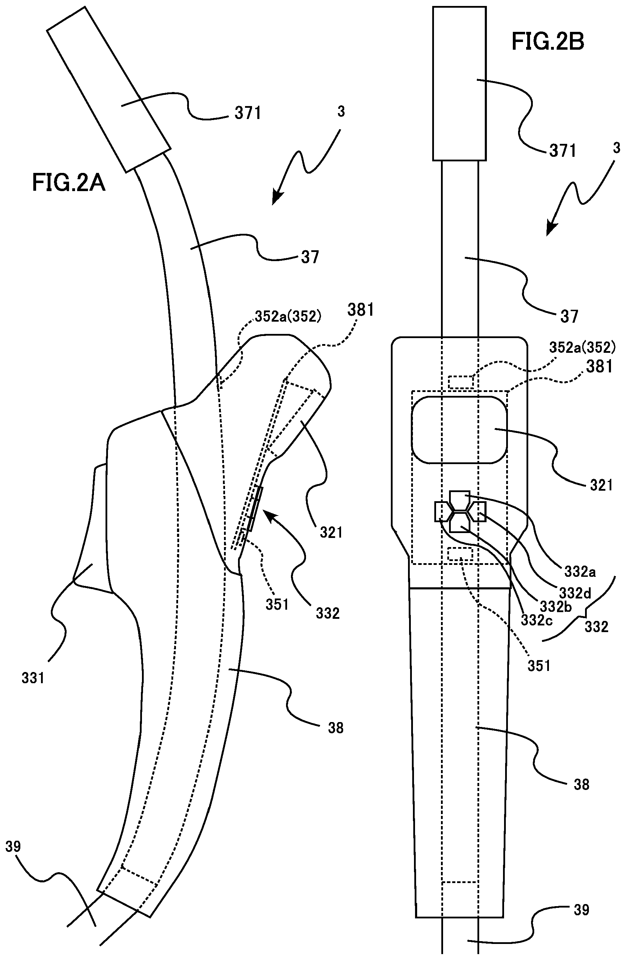

FIGS. 2A and 2B show the external appearance of an example of the welding torch 3. FIG. 2A is a front view, and FIG. 2B is a plan view. As shown in FIGS. 2A and 2B, the welding torch 3 includes a torch body 37, a handle 38, a control substrate 381, the torch switch 331, the operation buttons 332, the display 321, the acceleration sensor 351, the temperature sensor 352, and the torch cable 39.

The torch body 37 is a tubular member made of metal, inside of which are disposed the liner through which the welding cable is inserted, the power cable 41, and the gas pipe 7. A nozzle 371 is attached to the tip of the torch body 37. The torch body 37 has a curved portion such that the worker can easily direct the nozzle 371 at the workpiece W.

The handle 38 is a part to be gripped by the worker and is provided so as to hold a base end portion of the torch body 37. The worker grips this handle 38 and performs welding work. The torch switch 331, the operation buttons 332, and the display 321 are disposed in the handle 38. Also, the control substrate 381 is disposed inside the handle 38. Circuits constituting the communications unit 31, the display unit 32, the operation unit 33, the storage unit 34, the sensor unit 35, and the control unit 36 are mounted on the control substrate 381.

The torch switch 331 is an operation means for receiving welding start/stop operation, and is disposed at a location where a worker gripping the handle 38 can easily perform a pressing operation with their index finger. By an on operation (pressing) of the torch switch 331, an operation signal is output to the control unit 36, and when that operation signal is input to the welding power supply apparatus 1, the welding power supply apparatus 1 outputs welding electric power. When the on operation is released, the welding power supply apparatus 1 stops the output of welding electric power. That is, welding is performed only while the torch switch 331 is being pressed.

The display 321 performs various display, and is disposed on the opposite side of the handle 38 as the torch switch 331, such that a worker who performs welding work by gripping the handle 38 can easily view a screen. The display 321 corresponds to an example of a "display apparatus".

The operation buttons 332 are operation means for switching screens or changing various settings values, and are disposed between the grip portion of the handle 38 and the display 321 on the same side of the handle 38 as the display 321. The operation buttons 332 include an up button 332a, a down button 332b, a left button 332c, and a right button 332d. When each of the buttons 332a to 332d is pressed, a corresponding operation signal is output to the control unit 36, and the control unit 36 performs corresponding processing. The left button 332c and the right button 332d are operation means for switching the screen to be displayed in the display 321. The up button 332a and the down button 332b are operation means for changing the settings values being displayed in the display 321.

A sensor that detects pressing of each operation button 332 is disposed on the control substrate 381. Further, the display 321 is disposed on the same control substrate 381. In the present embodiment, the display screen of the display 321 has a predetermined angle with respect to the control substrate 381 such that the worker can easily operate each operation button 332 while viewing the display screen of the display 321. Note that the display 321 may be disposed such that the display screen is parallel to the substrate. On the control substrate 381 there are mounted a microcomputer serving as the control unit 36, a memory serving as the storage unit 34, a communications module serving as the communications unit 31, and also various electronic components. The acceleration sensor 351 is also mounted on the control substrate 381.

The acceleration sensor 351 is a three-axis acceleration sensor, and detects acceleration in each axis direction and outputs detection values to the control unit 36. The control unit 36 calculates inclination information of the welding torch 3 based on the detection values input from the acceleration sensor 351 of the sensor unit 35. Note that the sensor unit 35 may be provided with a gyro sensor instead of the acceleration sensor 351.

The temperature sensor 352 detects temperature, and includes a thermistor 352a and a temperature measurement portion (not shown). In the present embodiment, the thermistor 352a is disposed most to the tip end side among the portions covered by the handle 38 of the torch body 37. The torch body 37 is more likely to be damaged by heat from an arc at a location further toward the tip end side. Accordingly, it is desirable to detect the temperature further toward the tip end side. In the present embodiment, the thermistor 352a is disposed at a position that is further toward the tip end side of the torch body 37, and where the thermistor 352a is not exposed. Note that the position where the thermistor 352a is disposed is not limited, and the thermistor 352a may be disposed at a position further toward the tip end side of the torch body 37 that is not covered by the handle 38. Also, if the thermistor 352a can withstand heat due to an arc, the thermistor 352a may be disposed within the nozzle 371. Conversely, if the thermistor 352a is not able to withstand a high temperature, the thermistor 352a may be disposed away from the tip portion where an arc is generated, in the base end portion of the torch body 37 where the temperature is comparatively low. Wherever the thermistor 352a is disposed, it is sufficient to acquire and set in advance the temperature at the position where the thermistor 352a is disposed in a state where it is possible for the welding torch 3 to be damaged. However, the manner of heat transfer is not necessarily constant, so the temperature at which the welding torch 3 will be damaged can be judged more reliably by detecting the temperature at the position where damage actually occurs. The thermistor 352a corresponds to an example of a "sensor". The thermistor 352a is connected to the temperature measurement portion, which is mounted on the control substrate 381 through two lead wires not shown. In the temperature measurement portion, an electric current is passed through the thermistor 352a, the potential difference between the two lead wires is measured, the resistance value of the thermistor 352a is calculated, and a temperature corresponding to the calculated resistance value is calculated. Thus, the temperature measurement portion measures a temperature T (hereinafter referred to as the "torch temperature") in a portion where the thermistor 352a of the torch body 37 makes contact. The temperature measurement portion outputs the detected torch temperature T to the control unit 36. Note that the temperature sensor 352 is not limited to a sensor using the thermistor 352a, and another sensor such as a thermocouple may be used.

Note that the external appearance of the welding torch 3 is not limited by the external appearance described above. For example, the placement and shape of the torch switch 331, the operation buttons 332, and the display 321 are not limited. Also, in the present embodiment, a case is disclosed where the operation buttons 332 are four independent buttons, but a single cross-shaped button may be used. Also, the number of buttons is not limited.

Next is a description of a function to give notification of the torch temperature T of the welding torch 3.

The control unit 36 inputs the torch temperature T from the sensor unit 35. Then, when the torch temperature T reaches a predetermined temperature Tb, the control unit 36 outputs a warning sound from a speaker not shown to prompt attention from the worker. Also, in a case where the torch temperature T has become a predetermined temperature Td or more, the control unit 36 stops the supply of electric power from the welding power supply apparatus 1 to prevent damage of the welding torch 3. Specifically, the control unit 36 causes the communications unit 31 to output a stop signal. After receiving the stop signal, the welding power supply apparatus 1 stops supplying electric power.

Also, the control unit 36 outputs the torch temperature T to the display unit 32 and causes the torch temperature T to be displayed in the display 321. The torch temperature T may always be displayed in the display 321, or may be displayed when the worker switches screens by operating the operation buttons 332 to select a screen that displays the torch temperature T (a torch temperature display screen).

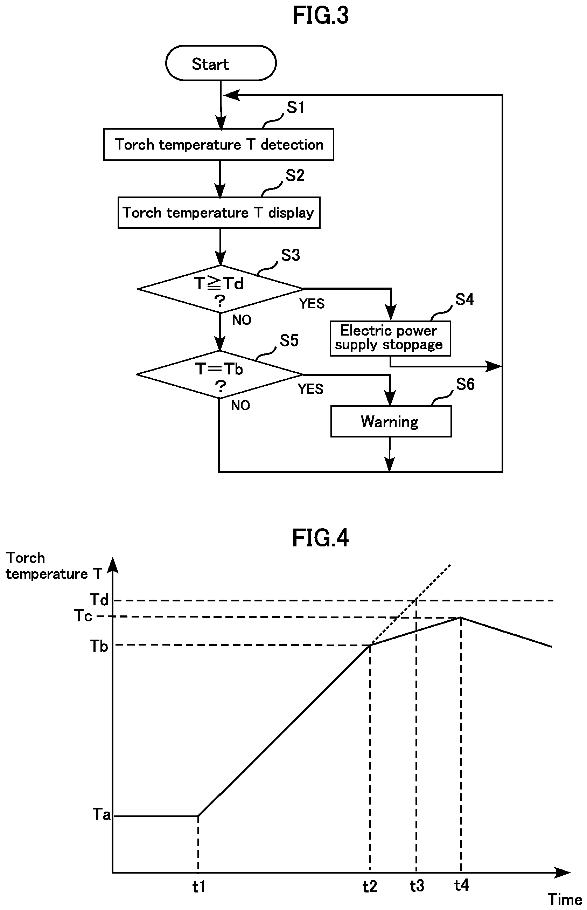

FIG. 3 is a flowchart for explaining torch temperature T notification processing performed by the control unit 36. This processing is started when the welding torch 3 starts.

First, the torch temperature T is detected (S1). Specifically, the torch temperature T detected by the temperature sensor 352 is input to the control unit 36. Next, the torch temperature T is displayed in the display 321 (S2). Specifically, the control unit 36 outputs the torch temperature T to the display unit 32, and the display unit 32 displays the torch temperature T in the display 321. Note that if the torch temperature T is not set to always be displayed in the display 321, the torch temperature T is displayed when the screen of the display 321 is switched to the torch temperature display screen.

Next, it is determined whether or not the torch temperature T is the temperature Td or more (S3). The temperature Td is set in advance as the temperature at which the welding torch 3 can be damaged by heat. If the torch temperature T is the temperature Td or more (S3: YES), electric power supply is stopped to prevent damage of the welding torch 3 (S4), and the process returns to step S1. Specifically, the control unit 36 causes the communications unit 31 to output a stop signal. After receiving the stop signal, the welding power supply apparatus 1 stops supplying electric power.

In step S3, if the torch temperature T is less than the temperature Td (S3: NO), it is determined whether or not the torch temperature T is the temperature Tb (S5). The temperature Tb is set in advance as a temperature judged to require attention because it is approaching the temperature Td. If the torch temperature T is the temperature Tb (S5: YES), a warning is issued to the worker (S6) . Specifically, the control unit 36 issues an instruction to output a warning sound to a sound output unit not shown. The sound output unit, upon input of the instruction, outputs a warning sound (for example, a buzzer sound) via a speaker. Instead of a simple warning sound, it is also possible to output voice guidance (like "the torch temperature is high") so as to prompt the user to pay attention to the torch temperature T. Also, a guidance message prompting the user to pay attention to the torch temperature T may be displayed on the display 321.

In step S5, if the torch temperature T is not the temperature Tb (S5: NO), the process returns to step S1. That is, if the torch temperature T is less than the temperature Td and is not the temperature Tb, the torch temperature T is merely displayed.

Note that the processing shown in the flowchart in FIG. 3 is only one example, and the torch temperature T notification processing performed by the control unit 36 is not limited to the processing described above.

The worker can recognize the torch temperature T by viewing the display of the display 321. The worker is informed in advance with information that when the torch temperature T is the temperature Tb or more it is necessary to pay attention, and that when the torch temperature T is the temperature Td or more damage due to heat is possible. Also, in the present embodiment, a warning sound is output when the torch temperature T reaches the temperature Tb, and the supply of electric power is stopped when the torch temperature T is the temperature Td or more. The worker can continue to perform work by viewing the torch temperature T displayed in the display 321 and not allowing the torch temperature T to become the temperature Td or more. Note that if the temperature Tb is set too low, there may be cases where the worker is prompted to pay attention too soon, and so attention of the worker is not sustained. Conversely, if the temperature Tb is set too high, there may be cases where the time until the torch temperature T reaches the temperature Td is too short, and so the worker cannot make appropriate adjustments. Accordingly, based on these facts, it is necessary to set the temperature Tb to an appropriate temperature.

FIG. 4 shows changes in the torch temperature T when the worker performs welding work while recognizing the torch temperature displayed in the display 321.

Welding is started at a time t1 in a state with the torch temperature T at a temperature Ta. The torch temperature T rises with the passage of time. The worker recognizes that the torch temperature T displayed in the display 321 is approaching the temperature Tb, and from a time t2 the worker lowers the usage rate and performs welding work such that the torch temperature T does not reach the temperature Td. From a time t4, the torch temperature T decreases from a peak at a temperature Tc, and the worker can recognize that it is not a problem to raise the usage rate a little more. The worker, while viewing the torch temperature T displayed on the display 321, can continue the welding work by raising and lowering the usage rate such that the torch temperature T does not reach the temperature Td.

Note that, hypothetically, if the worker fails to recognize the torch temperature T, the worker continues the welding work without knowing how high the torch temperature T has risen, and as indicated by the broken line in FIG. 4, at the time t3 the torch temperature T reaches the temperature Td (broken line in FIG. 4). In this case, if the electric power supply is stopped at the temperature Td, the welding work is stopped suddenly, which may affect the quality of the workpiece W. On the other hand, if the electric power supply is not stopped, the welding torch 3 may be damaged by heat.

According to the present embodiment, the torch temperature T detected by the temperature sensor 352 is displayed in the display 321. Therefore, the worker can recognize the torch temperature T by viewing the display of the display 321. As a result, the worker can continue work by adjusting the usage rate such that the torch temperature T does not reach or exceed the temperature (the temperature Td) at which damage by heat is possible. Accordingly, it is possible to prevent the welding torch 3 from being damaged by heat, and it is possible to prevent the quality of the workpiece W from being affected due to suddenly stopping the welding work.

Also, according to the present embodiment, a warning sound is output when the torch temperature T reaches a temperature (the temperature Tb) requiring caution, so it is possible to prompt the worker to pay attention. Also, when the torch temperature T is the temperature Td or more, the supply of electric power is stopped. Therefore, even if the worker fails to adjust the usage rate, the torch temperature T does not rise beyond the temperature Td, so damage to the welding torch 3 due to heat can be prevented.

Also, according to the present embodiment, the torch temperature T is displayed in the display 321 provided in the welding torch 3, so it is possible to know the torch temperature T by a means close at hand while performing the welding work.

Note that, in the present embodiment, a case is described where the torch temperature T detected by the temperature sensor 352 is displayed as-is, but this is not a limitation. For example, the control unit 36 may estimate the tip temperature of the torch body 37 from the torch temperature T and display the estimated tip temperature. In this case, the temperature sensor 352 and the control unit 36 correspond to an example of a "sensor unit".

Also, in the present embodiment, a case is described where the torch temperature T is displayed in the display 321, but this is not a limitation. Other notification methods may be used as long as the worker can recognize the torch temperature T. For example, the worker may be notified of the torch temperature T by sound from a speaker not shown. Also, a configuration may be adopted in which an LED lamp capable of changing its light emission color is provided, and the worker is notified of the torch temperature T by changing the light emission color according to the torch temperature T. In these cases, the speaker or the LED lamp corresponds to an example of a "notification unit".

Also, in the present embodiment, a case is described where the welding power supply apparatus 1 and the wire feed apparatus 2 communicate through the signal line 8, but this is not a limitation. For example, communications may be performed by superimposing signals on the power cables 41 and 42 or the electric power transmission line 5. In this case, the signal line 8 connecting the welding power supply apparatus 1 and the wire feed apparatus 2 is not required.

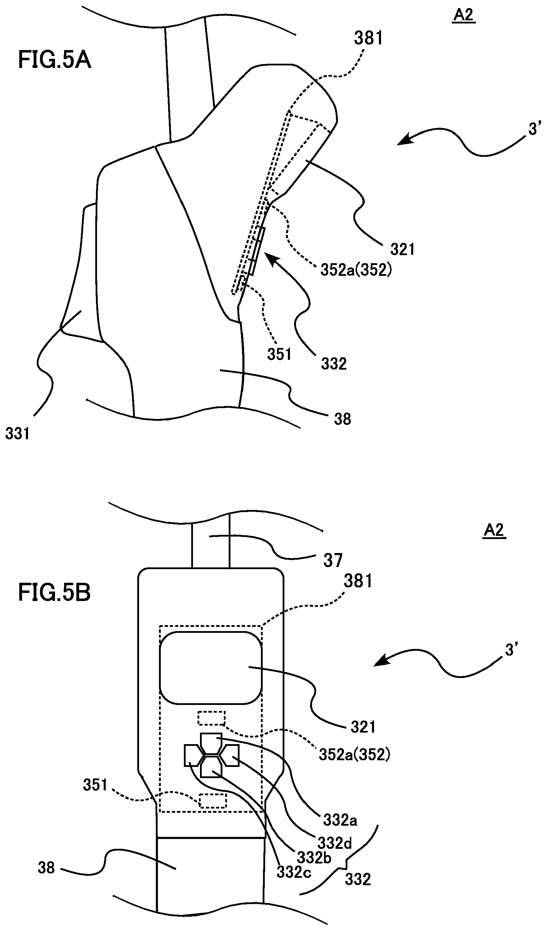

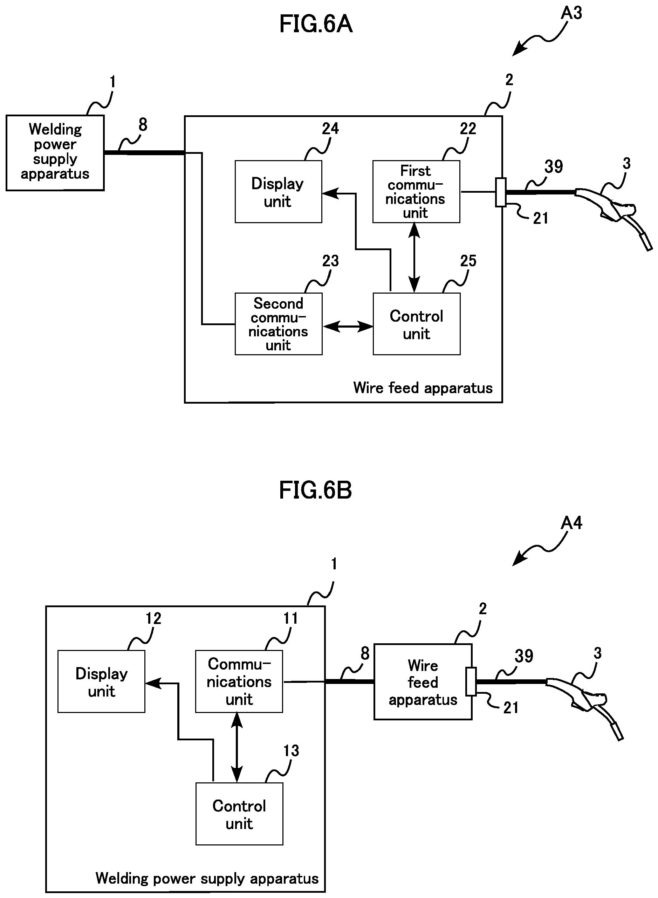

FIGS. 5A and 5B, and FIGS. 6A and 6B, show other embodiments of the present disclosure. Note that in these drawings, the same reference signs as those in the above first embodiment denote the same or similar elements as those in the above first embodiment.

FIGS. 5A and 5B are views for explaining a welding system A2 according to a second embodiment, and show part of an external view of an example of a welding torch 3' according to the second embodiment. FIG. 5A is a partial enlarged front view, and FIG. 5B is a partial enlarged plan view.

The welding system A2 shown in FIGS. 5A and 5B differs from the welding system A1 according to the first embodiment in that the thermistor 352a of the temperature sensor 352 is disposed on the control substrate 381, and the temperature sensor 352 measures a temperature T' of the control substrate 381 (hereinafter referred to as a "substrate temperature").

Because the temperature of the torch body 37 increases due to the heat of the arc, the temperature of the control substrate 381 disposed inside the handle 38 also rises. Some components mounted on the control substrate 381 are vulnerable to heat. For example, if the microcomputer malfunctions due to heat, the temperature sensor 352 cannot detect the temperature. Also, if the display 321 fails due to heat, it is impossible to display the detected temperature. In particular, the display 321 is vulnerable to heat, and the allowable temperature is, for example, about 70°C. In the present embodiment, the temperature sensor 352 measures the temperature (the substrate temperature T') of the control substrate 381, and displays the substrate temperature T' in the display 321.

As shown in FIGS. 5A and 5B, in the welding torch 3', the thermistor 352a is disposed near the display 321 on the control substrate 381. The temperature sensor 352 detects the temperature near the display 321 of the control substrate 381 as the substrate temperature T'.

The control unit 36 inputs the substrate temperature T' from the sensor unit 35 (the temperature sensor 352). Then, when the substrate temperature T' reaches a predetermined temperature Tb' (for example, 60°C), the control unit 36 outputs a warning sound from a speaker not shown to prompt attention from the worker. Also, in a case where the substrate temperature T' is a predetermined temperature Td' (for example, 70°C) or more, the control unit 36 stops the supply of electric power from the welding power supply apparatus 1 to prevent damage to the welding torch 3 (the components mounted on the control substrate 381). Also, the control unit 36 outputs the substrate temperature T' to the display unit 32, and displays the substrate temperature T' in the display 321.

According to the second embodiment, the substrate temperature T' detected by the temperature sensor 352 is displayed in the display 321. Therefore, the worker can recognize the substrate temperature T' by viewing the display of the display 321. As a result, the worker can continue work by adjusting the usage rate such that the substrate temperature T' does not reach or exceed the temperature (the temperature Td') at which damage by heat is possible. Accordingly, it is possible to prevent the welding torch 3 from being damaged by heat, and it is possible to prevent the quality of the workpiece W from being affected due to suddenly stopping the welding work. That is, similar effects as in the first embodiment can also be exhibited in the second embodiment.

Note that a configuration may also be adopted in which a thermistor 352a is disposed in each of the torch body 37 and the control substrate 381, and the temperature sensor 352 detects both the torch temperature T and the substrate temperature T'. In this case, both the torch temperature T and the substrate temperature T' may be displayed, or a configuration may be adopted in which it is possible to perform display by switching between the torch temperature display screen and the substrate temperature display screen.

Also, the control unit 36 may estimate the tip temperature of the torch body 37 from the substrate temperature T' detected by the temperature sensor 352, and display the estimated tip temperature. In this case, the temperature sensor 352 and the control unit 36 correspond to an example of a "sensor unit".

FIG. 6A is a block diagram showing the functional configuration of a welding system A3 according to a third embodiment.

The welding system A3 shown in FIG. 6A differs from the welding system A1 according to the first embodiment in that the torch temperature T detected by the temperature sensor 352 is displayed in a display unit 24 of the wire feed apparatus 2.

As shown in FIG. 6A, the wire feed apparatus 2 includes a first communications unit 22, a second communications unit 23, the display unit 24, and a control unit 25. The first communications unit 22 communicates with the welding torch 3 through a signal line (not shown) provided inside the torch cable 39. The second communications unit 23 communicates with the welding power supply apparatus 1 through the signal line 8. The display unit 24 performs various display, and is provided with, for example, a display (not shown) that may be a liquid crystal display device. The display unit 24 corresponds to an example of a "notification unit". The control unit 36 controls the wire feed apparatus 2.

The control unit 36 of the welding torch 3 causes the torch temperature T input from the sensor unit 35 to be transmitted to the communications unit 31. The first communications unit 22 of the wire feed apparatus 2 receives the torch temperature T transmitted from the communications unit 31 and outputs the torch temperature T to the control unit 25. The control unit 25 outputs the torch temperature T to the display unit 24, and displays the torch temperature T in the display.

According to the third embodiment, the torch temperature T detected by the temperature sensor 352 is displayed in the display of the wire feed apparatus 2. The worker can recognize the torch temperature T by viewing the display shown by the display of the wire feed apparatus 2. Therefore, the worker can continue work by adjusting the usage rate such that the torch temperature T does not reach or exceed the temperature (the temperature Td) at which damage by heat is possible. Accordingly, it is possible to prevent the welding torch 3 from being damaged by heat, and it is possible to prevent the quality of the workpiece W from being affected due to suddenly stopping the welding work. Also, in the case of the third embodiment, the welding torch 3 does not need to include the display 321 (the display unit 32). Also, in a case where the temperature measurement portion of the temperature sensor 352 is disposed in the wire feed apparatus 2, and the temperature measurement portion and the thermistor 352a are connected by two unshown lead wires provided inside the torch cable 39, the welding torch 3 does not need to include the operation unit 33, the communications unit 31, the storage unit 34, and the control unit 36. That is, if the thermistor 352a (or another sensor for detecting the temperature) is provided in the welding torch 3, the torch temperature T can be detected by the wire feed apparatus 2 and displayed.

FIG. 6B is a block diagram showing the functional configuration of a welding system A4 according to a fourth embodiment.

The welding system A4 shown in FIG. 6B differs from the welding system A1 according to the first embodiment in that the torch temperature T detected by the temperature sensor 352 is displayed in a display unit 12 of the welding power supply apparatus 1.

As shown in FIG. 6B, the welding power supply apparatus 1 includes a communications unit 11, the display unit 12, and a control unit 13. The communications unit 11 communicates with the wire feed apparatus 2 through the signal line 8. The wire feed apparatus 2 communicates with the welding torch 3, so the welding power supply apparatus 1 can communicate with the welding torch 3 through the wire feed apparatus 2. The display unit 12 performs various display, and is provided with, for example, a display (not shown) that is a liquid crystal display device. The display unit 12 corresponds to an example of a "notification unit". The control unit 13 controls the welding power supply apparatus 1.

The control unit 36 of the welding torch 3 causes the torch temperature T input from the sensor unit 35 to be transmitted to the communications unit 31. The communications unit 11 of the welding power supply apparatus 1 receives the torch temperature T transmitted from the communications unit 31 and outputs the torch temperature T to the control unit 13. The control unit 13 outputs the torch temperature T to the display unit 12, and displays the torch temperature T in the display.

According to the fourth embodiment, the torch temperature T detected by the temperature sensor 352 is displayed in the display of the welding power supply apparatus 1. The worker can recognize the torch temperature T by viewing the display shown by the display of the wire welding power supply apparatus 1. Therefore, the worker can continue work by adjusting the usage rate such that the torch temperature T does not reach or exceed the temperature (the temperature Td) at which damage by heat is possible. Accordingly, it is possible to prevent the welding torch 3 from being damaged by heat, and it is possible to prevent the quality of the workpiece W from being affected due to suddenly stopping the welding work. Also, in the case of the fourth embodiment, the welding torch 3 does not need to include the display 321 (the display unit 32). Also, in a case where the temperature measurement portion of the temperature sensor 352 is disposed in the wire feed apparatus 2, and the temperature measurement portion and the thermistor 352a are connected by two unshown lead wires provided inside the torch cable 39, the welding torch 3 does not need to include the operation unit 33, the communications unit 31, the storage unit 34, and the control unit 36. That is, if the thermistor 352a (or another sensor for detecting the temperature) is provided in the welding torch 3, the torch temperature T can be detected by the wire feed apparatus 2 and displayed by the welding power supply apparatus 1.

In the above first to fourth embodiments, a case related to a welding torch (a welding system) is described, but this is not a limitation. For example, the teachings of the present disclosure are also applicable to an arc cutting torch (arc cutting system) that cuts a workpiece W using an arc generated at a tip, or an arc gouging torch (arc gouging system) that performs groove engraving on a workpiece W. Furthermore, the teachings of the present disclosure is not limited to thermal processing by an arc, and is also applicable to a heat processing torch (heat processing system) that performs thermal processing such as gas welding or resistance welding. The teachings of the present disclosure are effective for preventing damage to a heat processing torch.

The heat processing torch, the power supply apparatus, the wire feed apparatus, and the heat processing system according to the present disclosure are not limited to the embodiments described above. Various design modifications can be freely made to the specific configuration of each part of the heat processing torch, the power supply apparatus, the wire feed apparatus, and the heat processing system according to the present disclosure.

The above disclosure encompasses embodiments according to the following clauses.
(Clause 1)
   A heat processing torch, comprising:
   a sensor unit that detects a temperature at a predetermined position of the heat processing torch; and
   a notification unit that reports information and gives notification of the temperature detected by the sensor unit.
(Clause 2)
   The heat processing torch according to clause 1,
   wherein the notification unit includes a display device to display the temperature detected by the sensor unit.
(Clause 3)
   The heat processing torch according to clause 1 or 2,
   wherein the notification unit includes a speaker to give audio notification of the temperature detected by the sensor unit.
(Clause 4)
   The heat processing torch according to any one of clauses 1 to 3, further comprising a torch body,
   wherein the predetermined position is at a base end portion of the torch body.
(Clause 5)
   The heat processing torch according to any one of clauses 1 to 3, further comprising a control substrate where a circuit that performs control is mountable,
   wherein the predetermined position is at the control substrate.
(Clause 6)
   The heat processing torch according to any one of clauses 1 to 5,
   wherein the sensor unit includes a thermistor.
(Clause 7)
   The heat processing torch according to any one of clauses 1 to 6,
   wherein welding is performed using heat from an arc.
(Clause 8)
   A heat processing system, comprising:
   a heat processing torch according to any one of clauses 1 to 7; and
   a power supply apparatus that supplies electric power to the heat processing torch.
(Clause 9)
   A power supply apparatus that supplies electric power to a heat processing torch provided with a sensor for detecting a temperature at a predetermined position of the heat processing torch, the power supply apparatus comprising:
   a notification unit that gives notification of the temperature detected using the sensor.
(Clause 10) A heat processing system, comprising:
   a power supply apparatus according to clause 9; and
   the heat processing torch.
(Clause 11)
   A wire feed apparatus that feeds a wire electrode to a heat processing torch provided with a sensor for detecting a temperature at a predetermined position of the heat processing torch, the wire feed apparatus comprising:
   a notification unit that gives notification of the temperature detected using the sensor.
(Clause 12) A heat processing system, comprising:
   a wire feed apparatus according to clause 11;
   the heat processing torch; and
   a power supply apparatus that supplies electric power to the heat processing torch.

## Claims

1. A heat processing torch, comprising:
a sensor unit configured to detect a temperature at a predetermined position of the heat processing torch; and
a notification unit configured to report information and give notification of the temperature detected by the sensor unit.

2. The heat processing torch according to claim 1,
wherein the notification unit includes a display device to display the temperature detected by the sensor unit.

3. The heat processing torch according to claim 1 or 2,
wherein the notification unit includes a speaker to give audio notification of the temperature detected by the sensor unit.

4. The heat processing torch according to any of claims 1 to 3, further comprising a torch body,
wherein the predetermined position is at a base end portion of the torch body.

5. The heat processing torch according to any of claims 1 to 3, further comprising a control substrate where a circuit that performs control is mountable,
wherein the predetermined position is at the control substrate.

6. The heat processing torch according to any of claims 1 to 5,
wherein the sensor unit includes a thermistor.

7. The heat processing torch according to any of claims 1 to 6,
wherein welding is performed using heat from an arc.

8. A heat processing system, comprising:
a heat processing torch according to any of claims 1 to 7; and
a power supply apparatus configured to supply electric power to the heat processing torch.

9. A power supply apparatus that supplies electric power to a heat processing torch provided with a sensor for detecting a temperature at a predetermined position of the heat processing torch, the power supply apparatus comprising:
a notification unit configured to give notification of the temperature detected using the sensor.

10. A heat processing system, comprising:
a power supply apparatus according to claim 9; and
the heat processing torch.

11. A wire feed apparatus that feeds a wire electrode to a heat processing torch provided with a sensor for detecting a temperature at a predetermined position of the heat processing torch, the wire feed apparatus comprising:
a notification unit configured to give notification of the temperature detected using the sensor.

12. A heat processing system, comprising:
a wire feed apparatus according to claim 11;
the heat processing torch; and
a power supply apparatus that supplies electric power to the heat processing torch
